# EUROPEAN PATENT APPLICATION

(11) **EP 3 367 321 A1**
(43) Date of publication of application: **29.08.2018**
(21) Application number: 16808541.3
(22) Date of filing: 24.05.2016
(51) Int. Cl.: G06Q 50/10, A63H 17/00, A63H 19/00, A63H 27/00

(54) **ASSOCIATION OF EXTERNAL DEVICE WITH SCENARIO-BASED CONTENT OF MAIN DEVICE**

(30) Priority: 26.11.2015 KR 20150166492
(71) Applicant: MTEK C&K CO., LTD, Incheon 22106 (KR)
(72) Inventor: KIM, Jong-yong, Incheon 22106 (KR)
(74) Representative: TBK
(86) International application number: PCT/KR2016/005470
(87) International publication number: WO 2017/090851

(57) **Abstract**

The present invention relates to a technology in which one or more external devices are interlocked with scenario-based content executed on a main device. According to one embodiment of the present invention, a system for interlocking content and an external device is provided. The system includes a main device configured to store and execute content and at least one external device connected to the main device by communication. The content may include a control signal for controlling the external device. When the content is executed on the main device, the main device may transmit the control signal included in the content to the external device and the external device may perform a specific function in accordance with the control signal.

## Description

### [Technical Field]

The present invention relates to a technology which interlocks one or more external devices with scenario-based content executed on a main device.

### [Background Art]

Korean Patent No. 10-0698943 discloses a technology through which a toy equipped with an RFID reader reads a story from another toy equipped with an RFID tag and outputs the story as a voice or an image. This technology has an advantage in that it draws more interest from a user than when a specific voice is output by simply mounting a voice chip in a toy. However, this technology merely repeatedly outputs a voice or image stored in each toy, which is disadvantageous in that the user may easily feel bored over time.

Hence, the present applicant has developed a technique capable of developing a story while controlling a plurality of toys on the basis of a scenario command, which is disclosed in Korean Patent No. 10-1419038. According to this technique, the scenario command consists of a group of sequential commands which cause each toy to perform a specific function at a particular time as the story progresses. The scenario command is stored in each toy, and each toy counts time and performs a specific function at a particular time according to the command.

This technique has advantages of stimulating the curiosity of a user and increasing the immersiveness of a story because each toy plays a different role and outputs a corresponding image or voice. However, in this technique, only one story which has already been created is developed, and hence there is a disadvantage in that a user cannot actively participate in story development.

### [Disclosure]

### [Technical Problem]

The present invention was conceived to solve the aforementioned problems. One objective of the present invention is to increase a user's interest by interlocking content, such as moving pictures, a game, an educational program, or the like, which is executed on a main device (e.g., a smart device, such as a smart TV, a smartphone, or a smart pad, or a game console) with various functions of an external device, such as a toy.

Another objective of the present invention is to enable a user to select any of a plurality of blocks and sub-blocks constituting scenario-based content from a main device or an external device so that the content can be changed into a variety of content rather than be developed without variation, and thereby the user may enjoy a variety of content with one piece of content.

Still another objective of the present invention is to enable a main device to scan for a new external device when executing content, and search for and receive content update information from a newly found external device, whereby automatic updating the content is possible and adding the external device is facilitated.

Yet another objective of the present invention is to enable a user to select content and an external device to be interlocked with and register a newly purchased external device in the content before starting the content.

### [Technical Solution]

One aspect of the present invention provides a system for interlocking content and an external device. The system includes a main device configured to store and execute content and at least one external device connected to the main device by communication. The content may include a control signal for controlling the external device. When the content is executed on the main device, the main device may transmit the control signal included in the content to the external device and the external device may perform a specific function in accordance with the control signal.

Another aspect of the present invention provides a main device for interlocking content and an external device. The main device includes a memory configured to store content, a communication module configured to communicate with at least one external device, and a controller configured to control the memory and the communication module and execute the content. The controller may transmit a control signal included in the content to the external device through the communication module when the content is executed, and the external device may perform a specific function in accordance with the control signal.

Still another aspect of the present invention provides an external device which is interlocked with content of a main device. The external device includes a communication module configured to be connected to the main device in which content is stored and executed by communication, an operation unit configured to perform a unique specific function, and a controller configured to control the communication module and the operation unit. The content may include a control signal for controlling the external device. When the main device transmits the control signal included in the content as the content is executed, the controller may receive the control signal through the communication module and perform a specific function through the operation unit in accordance with the control signal.

Yet another aspect of the present invention provides a method of interlocking content and an external device. The method includes storing content in a main device and connecting at least one external device to the main device through communication, wherein the content includes a control signal for controlling the external device. When the content stored in the main device is executed, the main device may transmit the control signal included in the content to the external device, and the external device may be interlocked with the content and perform a corresponding function in accordance with the control signal.

### [Advantageous Effects]

According to embodiments of the present invention, content, such as moving pictures, a game, an educational program, or the like, which is executed on a main device (e.g., a smart device, such as a smart TV, a smartphone, or a smart pad, or a game console) is interlocked with various functions of an external device, such as a toy, thereby increasing a user's interest.

In addition, according to embodiments of the present invention, a user may select any of a plurality of blocks and sub-blocks constituting scenario-based content from a main device or an external device so that the content can be changed into a variety of content rather than be developed without variation, and thereby the user may enjoy a variety of content with one piece of content.

Moreover, according to embodiments of the present invention, when a main device executes content, the main device scans for a new external device and searches for and receives content update information from a newly found external device, whereby automatic updating the content is possible and adding the external device is facilitated.

Further, according to embodiments of the present invention, a user may select content and an external device to be interlocked with and register a newly purchased external device in the content before starting the content.

### [Description of Drawings]

FIG. 1 is a schematic diagram illustrating a system in which a plurality of external devices are interlocked with content executed on a main device according to one embodiment of the present invention.
FIG. 2 is a block diagram illustrating schematic configurations of a main device and an external device according to one embodiment of the present invention.
FIG. 3 is a block diagram illustrating a configuration of a main device according to another embodiment of the present invention.
FIG. 4 is a schematic diagram illustrating a configuration of scenario-based content according to one embodiment of the present invention.
FIG. 5 is a diagram showing a mapping relationship between content of a main device and a function of an external device.
FIG. 6 is a flowchart illustrating a method of interlocking content of a main device and an external device according to one embodiment of the present invention.
FIG. 7 is a flowchart illustrating a method of interlocking content of a main device and an external device according to another embodiment of the present invention.

### [Modes of the Invention]

Hereinafter, exemplary embodiments of the present invention will be described in detail.

However, the present invention may be embodied in many different forms and is not to be construed as being limited to the embodiments set forth herein. Rather, these embodiments are provided so that this disclosure will be thorough and complete, and will fully convey the concept of the invention to those skilled in the art. The principles and features of this invention may be employed in varied and numerous embodiments without departing from the scope of the invention.

Furthermore, well known or widely used techniques, elements, structures, and processes may not be described or illustrated in detail to avoid obscuring the essence of the present invention. Although the drawings represent exemplary embodiments of the invention, the drawings are not necessarily to scale and certain features may be exaggerated or omitted in order to better illustrate and explain the present invention. Throughout the drawings, the same drawing reference numerals should be understood to refer to the same elements.

Unless otherwise defined, all terms (including technical and scientific terms) used herein have the same meaning as commonly understood by one of ordinary skill in the art to which this disclosure belongs. Moreover, as used herein, singular articles also include a description of a plurality of elements or components unless the plural is obviously excluded by specific context.

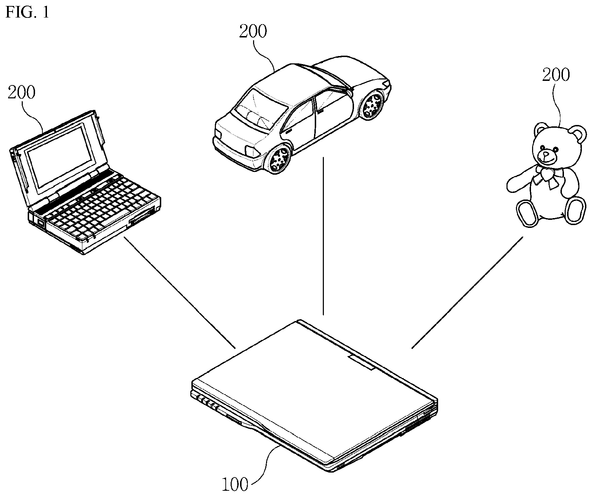

FIG. 1 is a schematic diagram illustrating a system in which a plurality of external devices are interlocked with content executed on a main device according to one embodiment of the present invention.

Referring to FIG. 1, a main device 100 is an electronic device capable of storing and executing content and having a communication function. For example, the main device 100 may include various types of electronic devices, such as a smart TV, a smartphone, a smart pad, a tablet PC, a mobile phone, an e-book reader, a desktop PC, a laptop PC, a notebook computer, and a wearable device (e.g., a head-mounted device (HMD), such as electronic glasses, electronic clothing, a smart watch, etc.).

An external device 200 may be not only various types of electronic devices like the main device 100, but also various types of toys with various functions. The main device 100 and the external device 200 are connected to each other via a wired or wireless communication.

The main device 100 may store content and execute content according to user input. When content is executed, the main device 100 transmits a control signal contained in the content to the external device 200, and the external device 200 is interlocked with the content and executes a specific function in accordance with the control signal received from the main device 100.

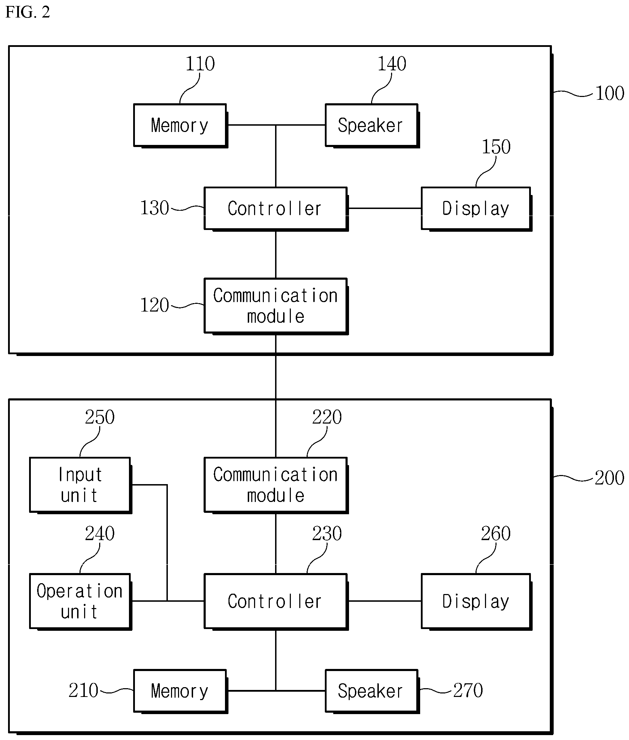

FIG. 2 is a block diagram illustrating schematic configurations of a main device and an external device according to one embodiment of the present invention.

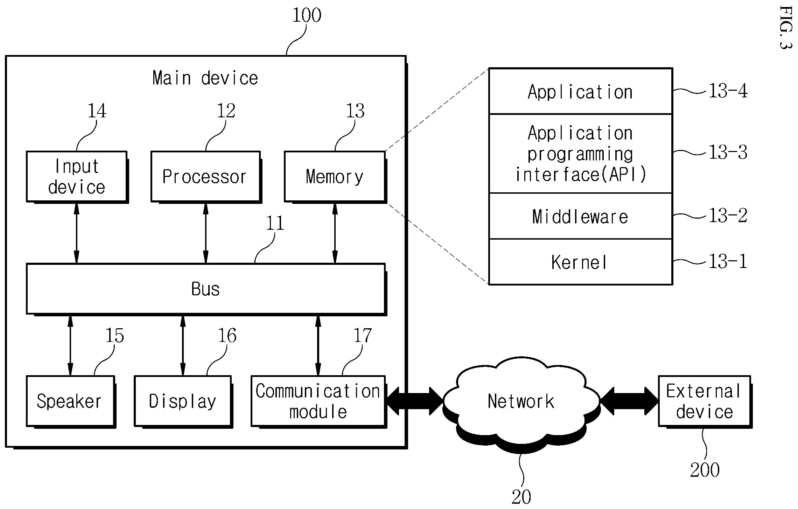

Referring to FIG. 2, the main device 100 in accordance with one embodiment may be formed with a memory 110, a communication module 120, a controller 130, a speaker 140, and a display 150. This configuration of the main device 100 is only for illustrative purpose and is not intended to limit the present invention. In addition, the main device 100 may also essentially or alternatively include various components. Another example of the main device 100 will be described with reference to FIG. 3.

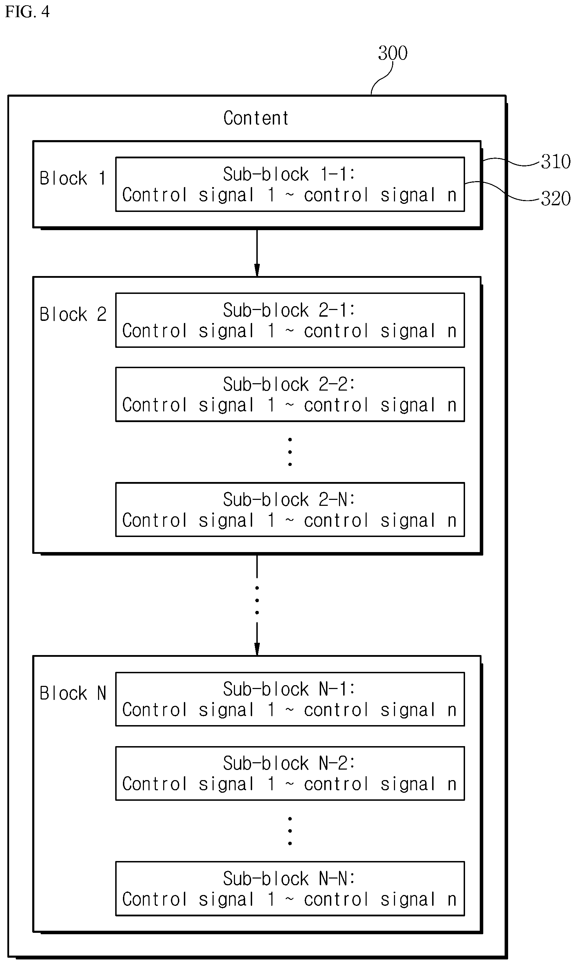

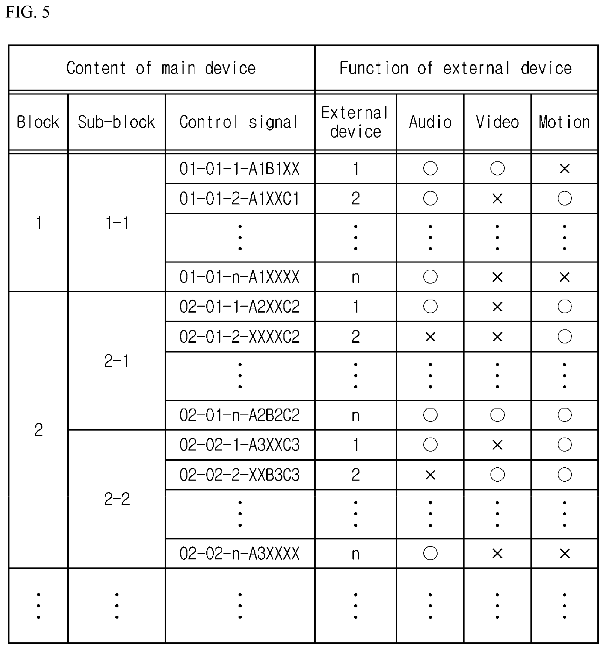

The memory 110 stores scenario-based content. Content refers to various types of information which include audio and video and are produced, processed, and distributed in a digital manner, and is so-called scenario-based content developed with stories or storylines, such as moving pictures, games, educational programs, and the like. The content and the control signal will be described below in more detail with reference to FIGS. 4 and 5. In addition, the memory 110 may store content update information received from the external device 200.

The communication module 120 performs a wired or wireless communication with the external device 200. More specifically, the communication module 120 may transmit the control signal to the external device 200 under control of the controller 130 and receive a feedback signal from the external device 200.

The controller 130 controls each component of the main device 100. That is, the controller 130 controls the communication module 120 to communicate with at least one external device 200 and execute content stored in the memory 110 according to the user input. In addition, when the content is executed, the controller 130 extracts a control signal included in the content and transmits the external device 200 through the communication module 120. In this case, as a transmission method, a unicast method of transmitting the control signal to a specific external device 200 and a multicast method of transmitting the control signal to all identified external devices 200 may be used. When the controller 130 receives a feedback signal from the external device 200 or directly receives a user input, the controller 130 may select and execute a pertinent sub-block. This will be described below in more detail.

When the content is executed, the speaker 140 outputs audio of the content, such as voice, sound, and music.

When the content is executed, the display 150 outputs text, symbols, images, and video, such as moving pictures, of the content.

Meanwhile, as shown in FIG. 2, the external device 200 according to one embodiment may be formed with a memory 210, a communication module 220, a controller 230, an operation unit 240, an input unit 250, a display 260, and a speaker 270. This configuration of the external device 200 is only for illustrative purpose and is not intended to limit the present invention. Additionally, the external device 200 may also essentially or alternatively include various embodiments.

The memory 210 may store audio and video which may be output in conjunction with the content. In addition, the memory 210 may store a control signal received from the main device 100 or another external device 200. Furthermore, the memory 210 may store content update information or the like.

The communication module 220 performs wired or wireless communication with the main device 100 and another external device 200. More specifically, the communication module 220 may receive a control signal from the main device 100 under control of the controller 230 and transmit the received control signal to the other external device 200. In addition, the communication module 220 may transmit a feedback signal to the main device 100 under the control of the controller 230.

The controller 230 controls each component of the external device 200. That is, the controller 230 controls the communication module 220 to communicate with the main device 100 and the other external device 200. In particular, the controller 230 receives the control signal from the main device 100 through the communication module 220 and controls the speaker 270 and the display 260 to output audio and video stored in the memory in accordance with the received control signal. Additionally, the controller 230 controls the operation unit 240 to perform a specific function specified by the control signal. Moreover, the controller 230 receives a user input through the input unit 250 and transmits a feedback signal corresponding to the received user input to the main device 100 through the communication module 220.

The operation unit 240 performs a specific function of the external device 200. For example, the operation unit 240 may perform a specific mechanical function of the external device 200. In addition, the operation unit 240 may perform a specific audiovisual function of the external device 200 in conjunction with the display 260 and the speaker 270.

The input unit 250 receives a user input. For example, the input unit 250 may be a key, a button, a touchpad, a touchscreen, or the like, or may be a voice recognition module which recognizes a user's voice, a gesture recognition module which recognizes a user's gesture, a proximity sensor which recognizes an approach of a user, or the like.

The display 260 and the speaker 270 are interlocked with content and respectively output video and audio.

Meanwhile, the main device of the present invention may have the same configuration as illustrated in FIG. 3. FIG. 3 is a block diagram illustrating a configuration of a main device according to another embodiment of the present invention.

Referring to FIG. 3, the main device 100 may include a bus 11, a processor 12, a memory 13, an input device 14, a speaker 15, a display 16, and a communication module 17.

The bus 11 may be a circuit that connects the components of the main device 100 to each other and delivers communications (e.g., a control message) between the components.

The processor 12 may receive a command from the other components through the bus 11, interpret the received command, and perform computation or data processing according to the interpreted command. The processor 12 corresponds to the controller 130 of FIG. 2.

The memory 13 may store commands or data received from or generated by the processor 12 or the other components. The memory 13 may include programming modules, such as a kernel 13-1, middleware 13-2, an application programming interface (API) 13-3, an application 13-4, and the like. These programming modules may be configured by software, firmware, hardware, or a combination thereof. The memory 13 corresponds to the memory 110 of FIG. 2.

The kernel 13-1 may control or manage system resources (e.g., the bus 11, the processor 12, and the like) which are used to perform an operation or a function implemented by the other programming modules. In addition, the kernel 13-1 may provide an interface through which the middleware 13-2, the API 13-3, and the application 13-4 access and control or manage the individual components of the main device 100.

The middleware 13-2 may act as an intermediary so that the API 13-3 or the application 13-4 may communicate with the kernel 13-1 to exchange data. In addition, with respect to operation requests from the application 13-4, the middleware 13-2 may perform control (e.g., scheduling or load balancing) of the operation requests using a specific method, such as assigning priority to at least one of applications 13-4 to use a system resource of the main device 100.

The API 13-3 is an interface through which the application 13-4 controls the function provided by the kernel 13-1 or the middleware 13-2, and may include at least one interface or function (e.g., a command) for, for example, file control, window control, image processing, and character control.

The application 13-4 may be various types of applications related to the execution of the content stored in the memory 13. In addition, the application 13-4 may be a content editing application for selectively mapping a control signal included in the content to a specific function of each external device 200. Additionally, the application 13-4 may be an application related to information exchange between the main device 100 and the external device 200. Moreover, the application 13-4 may be a device management application for managing the external device 200. Also, the application 13-4 may be an application related to scanning for the external device 200. In addition, the application 13-4 may be an application which provides a user interface for registering a new external device 200 in the content. Further, the application 13-4 may be an application which provides a user interface for selecting the external device 200 interlocked with the content.

The input device 14 may transmit a command or data input by the user to the other components through the bus 11. For example, the input device 14 may be a touchscreen and may provide the processor 12 with data about a user's touch input. The input device 14 may be various other types of devices as well as a touchscreen. For example, the input device 14 may be a key, a button, a touch panel, a pen sensor, an ultrasonic device, a gesture sensor, a gyro sensor, an acceleration sensor, a grip sensor, a proximity sensor, etc.

The speaker 15 may output audio information to the user. The speaker 15 corresponds to the speaker 140 of FIG. 2.

The display 16 may display video information to the user. The display 16 corresponds to the display 150 of FIG. 2.

The communication module 17 may connect communication between the main device 100 and the external device 200. The communication module 17 corresponds to the communication module 120 of FIG. 2. For example, the communication module 17 may be connected to a network 20 via wired communication or wireless communication and communicate with the external device 200. The wireless communication may include at least one of, for example, wireless fidelity (wifi), Bluetooth (BT), near-field communication (NFC), ZigBee, infrared data association (IrDA), and a cellular communication (e.g., LTE, LTE-A, CDMA, WCDMA, UMTS, WiBro, GSM, or the like). The wired communication may include at least one of, for example, universal serial bus (USB), high definition multimedia interface (HDMI), recommended standard 232 (RS-232), and plain old telephone service (POTS).

The network 20 may be a telecommunications network. The telecommunications network may include at least one of a computer network, the Internet, the Internet of things, and a telephone network. A protocol (e.g., a transport layer protocol, a data link layer protocol, a physical layer protocol, etc.) for communication between the main device 100 and the external device 200 may be supported by at least one of the application 13-4, the API 13-3, the middleware 13-2, the kernel 13-1, and the communication module 17.

Herein, content executed on the main device will be described below in more detail with reference to FIG. 4. FIG. 4 is a schematic diagram illustrating a configuration of scenario-based content according to one embodiment of the present invention.

Referring to FIG. 4, content 300 is composed of a plurality of blocks 310 that progress sequentially. In addition, each of the blocks 310 is composed of one or a plurality of sub-blocks 320.

When a plurality of sub-blocks 320 are present in one block 310, each of the sub-blocks 320 may be composed of content that continues from a block 310 of a preceding stage, and the sub-blocks 320 may have different content. In other words, the sub-blocks 320 may be subordinate to the preceding block 310, or may be independent of each other.

When the execution of each of the blocks 310 is completed, the main device 100 may select and execute one of the sub-blocks 320 that constitute a following block 310. In this case, the main device 100 may select a particular sub-block 320 according to a feedback signal received from the external device 200, and when a user input is directly received, may select the particular sub-block 320 corresponding to the user input.

As described above, it is possible to selectively execute the sub-block 320 in each of the blocks 310 so that various combinations of sub-blocks 320 may be performed through one piece of content 300 and various stories or storylines may be enjoyed.

Meanwhile, the content 300 includes a control signal for controlling each external device 200. Including the control signal in the content 300 may mean that the content 300 may include the control signal in the content 300 itself, or that the content 300 is mapped to the control signal. According to one embodiment, each sub-block 320 that constitutes the content 300 may include the control signal. The control signal is a control command for controlling each of a plurality of external devices 200 and is formed by including a unique code of the external device 200 and a unique code of a function to be performed by the external device 200.

Hereinafter, the control signal will be described below in more detail with reference to FIG. 5. FIG. 5 is a diagram showing a mapping relationship between content of a main device and a function of an external device. The mapping relationship and a format of a control signal shown in FIG. 5 are only for illustrative purposes and are not intended to limit the present invention. In addition, it may be understood that various mapping relationships and control signal formats may be employed.

Referring to FIG. 5, content to be executed on the main device is composed of a plurality of blocks, each of the blocks is composed of at least one sub-block, and each of the sub-blocks includes a control signal corresponding to an external device. In addition, the control signal is composed of a unique code of the external device and a function code of the external device.

As one example, a control signal "02-01-n-A2B2C2" indicates that a control signal included in a first sub-block of a second block performs function A2 (audio output), function B2 (video display), and function C2 (specific operation) of an n^{th} external device. In the similar manner, in a control signal "02-02-1-A3XXC3" indicates that a control signal included in a second sub-block of the second block performs function A3 (audio output) and function C2 (specific function) of a first external device and does not perform an image display function.

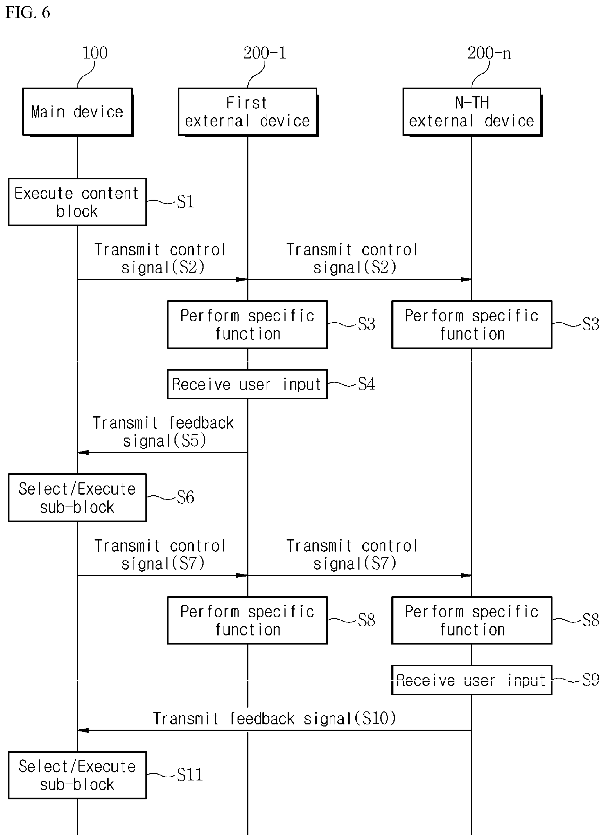

Then, a method of interlocking the content to be executed on the main device with the external device will be described below in detail with reference to FIG. 6. FIG. 6 is a flowchart illustrating a method of interlocking content of a main device and an external device according to one embodiment of the present invention.

First, in operation S1, the main device 100 executes content. That is, the main device 100 executes a specific block included in the content.

When the content is executed, the main device 100 extracts a control signal included in the content and transmits the control signal to the external device 200 in operation S2. In this case, the control signal may be transmitted only to a first external device 200-1 in a unicast manner, or may be transmitted to all external devices 200-1 to 200-n in a multicast manner. In the former case, the first external device 200-1 may transmit the control signal received from the main device 100 to another external device.

Each of the external devices 200-1 to 200-n receiving the control signal may perform a specific function in operation S3.

Meanwhile, the content block executed in operation S1 may request that a user select a sub-block to be executed next. For example, in operation S4, the first external device 200-1 may receive a user input. Then, the first external device 200-1 transmits a feedback signal corresponding to the received user input to the main device 100 in operation S5.

The main device 100 which receives the feedback signal from the first external device 200-1 selects and executes a sub-block corresponding to the feedback signal in operation S6, and extracts a control signal included in the sub-block and transmits the control signal to the external device 200 in operation S7.

In operation S8, each of the external devices 200-1 to 200-n performs a specific function corresponding to the received control signal.

The sub-block executed in operation S6 may request that the user select a sub-block to be executed next. For example, an n^{th} external device 200-n may receive a user input in operation S9 and transmit a feedback signal corresponding to the received user input to the main device 100 in operation S10.

The main device 100 which receives the feedback signal from the n^{th} external device 200-n selects and executes a sub-block corresponding to the feedback signal in operation S11.

Meanwhile, all of the block or sub-blocks do not request that the user make a selection and the user's selection is not necessarily performed through the external device 200. Although not illustrated, the main device 100 may autonomously request that the user select a sub-block or receive the user's selection through a speaker and/or a display. In addition, when there is no user input for a predetermined time period, the external device 200 may transmit a preset feedback signal to the main device 100, or the main device 100 may execute a preset sub-block.

A practical example of the above-described method of interlocking content of a main device and an external device will be described. For example, it is assumed that content executed on the main device 100 is an educational program for educating children on how to safely cross a road at a crosswalk. In addition, it is also assumed that the external devices 200 include a toy car, a toy traffic light, and a toy pedestrian.

First, when the content is executed on the main device 100, a speaker and display of the main device 100 output audio and video of the content. Then, according to a control signal transmitted from the main device 100, the toy car performs a function of moving while making a honking sound, the toy traffic light performs a function of flashing the traffic light, and the pedestrian toy waits without moving at the crosswalk (i.e., does not perform a function).

Then, the main device 100 may display the crossing signal light in red along with a screen showing crossing through the display, and may output the phrases "What will you do in this case? Should you cross the crosswalk? Please touch the pedestrian if you want to cross the crosswalk and wait if you don't."

If a user touches or approaches the pedestrian toy with a finger, the toy pedestrian performs a function of crossing the crosswalk and the toy car performs a function of passing the crossing while flashing its headlights. In addition, the main device 100 outputs audio and video in which a traffic accident occurs through the speaker and the display.

If there is no user input for a predetermined time period, the toy traffic light performs a function of changing the light to green light after the toy car passes the crosswalk, and then the pedestrian toy performs a function of crossing the crosswalk. Moreover, the main device outputs an applause sound and complimentary phrases through the speaker and the display.

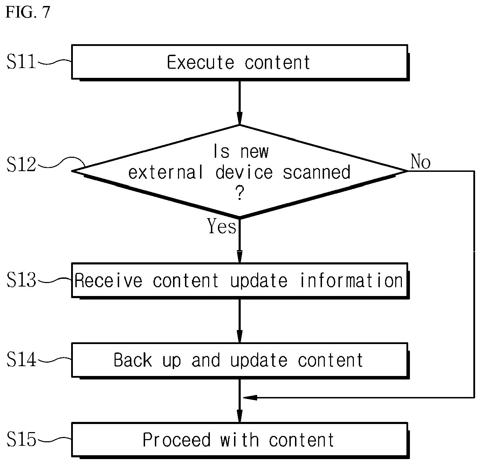

The present invention may also be applied to a case in which a new external device is added. In this case, when content is executed, the main device scans for the new external device, searches for and receives content update information from the newly found external device, and updates the content. Hereinafter, an embodiment of the above-description will be described with reference to FIG. 7. FIG. 7 is a flowchart illustrating a method of interlocking content of a main device and an external device according to another embodiment of the present invention.

Referring to FIG. 7, after the main device 100 executes the content 300 in operation S11, the main device 100 scans for whether there is an external device connected to the main device 100 by communication in operation S12.

When external devices 200 found as a result of the scan are all interlocked with the content 300, that is, when there is no new external device that is not interlocked with the content 300, the main device 100 executes the content 300 without updating the content in operation S15.

If a new external device 200 is found as a result of the scan, the main device 100 needs to update the content 300 so that the external device 200 is interlocked with the content 300. That is, in order to interlock the new external device 200 with the content 300, a control signal included in the content 300 needs to be modified.

Hence, the main device 100 receives content update information from the new external device 200 in operation S13, and updates the content 300 by modifying the control signal in the content 300 according to the received content update information in operation S14.

Meanwhile, the main device 100 may back up the content 300 stored in a memory of the main device 100 before updating the content 300 on the basis of the content update information received from the new external device 200 so that the update may be performed while preventing damage to the content 300. Hence, even when the content 300 is damaged while being updated, recovery may be easily performed and the previous content 300 may be executed when the added external device 200 is removed.

On the other hand, the main device 100 may provide a user interface (or menu item) so that the user may select an external device 200 to be interlocked with the content 300 before starting the content 300. In this case, the user may select a desired external device 200 through the user interface (or menu item) provided by the main device 100 so that the user may enjoy one piece of content 300 in various ways and easily register a newly purchased external device 200 in the content 300.

As described above, the external device 200 which can be interlocked with the content 300 may be various types of electronic devices, such as various smart devices and wearable devices, and may be various toys having a variety of functions. Additionally, in some cases, the external device 200 may be various home appliances or mobile devices to which the Internet of things can be applied. The user may select the external device 200 to be interlocked with the content 300 from among the above-described external devices 200, and at this time, the external device 200 may be selected on an individual device basis or on a type or group basis.

When the external device 200 is selected by the user, the main device 100 registers the selected external device 200 in the content 300. That is, as described above, the main device 100 updates the content 300 by modifying the control signal included in the content 300. In addition, the main device 100 may modify data of the content 300 according to the selected external device 200. In other words, the content 300 includes audio/video data that corresponds to the external device 200, and the audio/video data of the content 300 is modified when the selected external device 200 is changed. Additionally, the main device 100 may modify the scenario according to the selected external device 200. That is, some blocks that progress sequentially during execution of the content 300 may be omitted or the order thereof may be changed.

In the meantime, as described above, the external device 200 which receives the control signal from the main device 100 may perform a specific function and may transmit a feedback signal to the main device 100 when a user input is received, and when the external device 200 is a wearable device, the wearable device may recognize various types of information, such as a user's touch, voice, motion, sight line, position, health condition, and the like, and transmit the recognized information to the main device 100 as the feedback signal.

Up to this point, embodiments of the present invention have been described, but such embodiments are for easily explaining and facilitating understanding of the present invention, and the range of the present invention is not limited thereto. It will be apparent to those skilled in the art to which the present invention pertains that other modifications may be made based on the technical spirit of the present invention.

## Claims

1. A system for interlocking content and an external device, comprising:
a main device configured to store and execute content; and
at least one external device connected to the main device by communication,
wherein the content includes a control signal for controlling the external device, and
when the content is executed on the main device, the main device transmits the control signal included in the content to the external device and the external device performs a specific function in accordance with the control signal.

2. A main device for interlocking content and an external device, comprising:
a memory configured to store content;
a communication module configured to communicate with at least one external device; and
a controller configured to control the memory and the communication module and execute the content,
wherein the controller transmits a control signal included in the content to the external device through the communication module when the content is executed, and the external device performs a specific function in accordance with the control signal.

3. An external device which is interlocked with content of a main device, the external device comprising:
a communication module configured to be connected to the main device in which content is stored and executed by communication;
an operation unit configured to perform a unique specific function; and
a controller configured to control the communication module and the operation unit,
wherein the content includes a control signal for controlling the external device, and
when the main device transmits the control signal included in the content as the content is executed, the controller receives the control signal through the communication module and performs a specific function through the operation unit in accordance with the control signal.

4. A method of interlocking content and an external device comprising:
storing content in a main device; and
connecting at least one external device to the main device through communication,
wherein the content includes a control signal for controlling the external device, and
when the content stored in the main device is executed, the main device transmits the control signal included in the content to the external device and the external device is interlocked with the content and performs a corresponding function in accordance with the control signal.

5. The method of claim 4, wherein the content is composed of a plurality of blocks processed sequentially, and each of the blocks is composed of one or more sub-block.

6. The method of claim 5, wherein when execution of each of the blocks is completed, the main device selects one sub-block of a subsequent block according to a user input or a feedback signal received from the external device.

7. The method of claim 4, wherein the control signal includes a unique code of the external device and a function code of the external device.

8. The method of claim 4, wherein when the content is executed, the main device scans for an external device connected to the main device by communication.

9. The method of claim 8, wherein when a new external device is found as a result of the scan, the main device receives content update information from the new external device and updates the content.

10. The method of claim 4, wherein the main device receives a selection of an external device to be interlocked with the content before the content is executed.

11. The method of claim 10, wherein when the selection of the external device is received, the main device updates the content by modifying the control signal included in the content.
